# EUROPÄISCHE PATENTSCHRIFT

(11) **EP 0 879 508 B1**
(45) Veröffentlichungstag und Bekanntmachung des Hinweises auf die Patenterteilung: **04.09.2002**
(21) Anmeldenummer: 97903234.9
(22) Anmeldetag: 07.02.1997
(51) Int. Cl.: H04B 7/26

(54) **FUNKRELAISANORDNUNG ZUR REICHWEITENVERLÄNGERUNG AUF DER FUNKSTRECKE EINES FERNMELDESYSTEMS**
RADIO RELAY ARRANGEMENT FOR EXTENDING THE RANGE ON THE RADIO LINK OF A TELECOMMUNICATION SYSTEM
SYSTEME DE RELAIS RADIO POUR AUGMENTER LA PORTEE SUR LA LIAISON HERTZIENNE D'UN SYSTEME DE TELECOMMUNICATIONS

(30) Priorität: 09.02.1996 EP 96101911
(43) Veröffentlichungstag der Anmeldung: 25.11.1998
(73) Patentinhaber: SIEMENS AKTIENGESELLSCHAFT, 80333 München (DE)
(72) Erfinder: VON BRANDT, Achim, D-81929 München (DE)
(86) Internationale Anmeldenummer: EP9700562
(87) Internationale Veröffentlichungsnummer: WO97029561

(56) Entgegenhaltungen:
- EP-A- 0 614 290
- EP-A- 0 637 144
- EP-A- 0 670 640
- WO-A-95/26615

## Beschreibung

Die Erfindung betrifft eine Funkrelaisanordnung zur Reichweitenverlängerung auf der Funkteilnehmerstationen mit einer Funkbasisstation verbindenden Funkstrecke eines Fernmeldesystems nach dem Oberbegriff des Patentanspruchs 1.

Für den Betrieb einer solchen Funkrelaisanordnung muß gefordert werden, daß die Gesamtheit der zur Verfügung stehenden Funkkanäle möglichst gut ausgenutzt wird. Es ist ferner zu fordern, daß auch dann, wenn eine Mehrzahl solcher Funkrelaisanordnungen in Kaskade geschaltet sind, es nicht zu übermäßig langen Signallaufzeiten kommt.

Schließlich ist anzustreben, daß der Einsatz solcher Funkrelaisanordnungen unter weitgehender Beibehaltung der Normen möglich ist, die für die Funkstrecke des Fernmeldesystems gelten. Bei einer solchen Normung kann es sich beispielsweise um die DECT-Norm (Digital European Cordless-Telecommunications)handeln, die durch das European Telecommunication Standards Institut (ETSI) festgelegt worden ist.

Durch ETSI sind auch schon zwei Vorschläge für solche Funkrelaisanordnungen beschrieben worden, von denen jedoch der eine lediglich im Hinblick auf die oben erwähnten Forderungen der guten Ausnutzung der Funkkanäle und der weitgehenden Beibehaltung des bestehenden Standards und der andere lediglich im Hinblick auf die Einhaltung geringer Signallaufzeiten eine befriedigende Lösung darstellt, worauf nachstehend noch näher eingegangen wird.

Die Aufgabe der Erfindung besteht daher darin, eine Funkrelaisanordnung anzugeben, die demgegenüber den genannen Anforderungen insgesamt in besserer Weise gerecht wird.

Diese Aufgabe wird mittels der im Kennzeichen des Patentanspruchs 1 angebenen Merkmale gelöst.

Die erfindungsgemäße Funkrelaisanordnung stellt demnach einerseits nach außen hin, d. h. also zu den Funkteilnehmerstationen und zu der Funkbasisstation Schnittstellenbedingungen zur Verfügung, die den genormten Schnittstellenbedingungen auf einer Funkstrecke ohne Funkrelaisanordnung entsprechen, andererseits werden dann, wenn die Funkrelaisanordnung aus mehreren in Kaskade geschalteten Teilen besteht, für die Schnittstellen zwischen diesen Teilen, also intern, Schnittstellenbedingungen bereitgestellt, die die bei solchen Kaskadierungen kritischen Signallaufzeiten auf einem vernünftig geringen Ausmaß halten und dennoch die Gefahr einer Blockierung wegen fehlender geeigneter Zeitschlitze weitgehend vermeiden.

Nachstehend wird die Erfindung anhand von Ausführungsbeispielen unter Bezugnahme auf eine Zeichnung näher erläutert.

In der Zeichnung zeigen:
Figur 1 das Blockschaltbild des eine Funkstrecke umfassenden Teils eines Fernmeldesystems,
Figuren 2 bis 5 Zeitdiagramme zur Veranschaulichung der Zeitschlitzbelegung bei der erfindungsgemäßen sowie bei den angesprochenen bekannten Funkrelaisanordnungen.

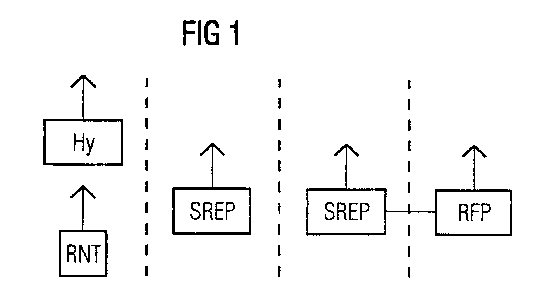

Bei dem Funksystem gemäß Figur 1 besteht zwischen Teilnehmerstationen, bei denen es sich um feste Teilnehmerstationen RNT oder um mobile Endgeräte Hy handeln kann, und einer vermittlungsstellenseitigen Funkbasisstation RFP eine Funkstrecke.

Zur Reichweitenverlängerung dieser Funkstrecke sind je zwei in Kaskade geschaltete Teile SREP einer Funkrelaisanordnung angeordnet.

Durch gestrichelte senkrechte Linien sind die Schnittstellen zwischen den einzelnen der erwähnten Anordnungen angedeutet.

Die erfindungsgemäße Funkrelaisanordnung arbeitet nun derart, daß zwischen der Funkbasisstation RFP und dem einen Teil SREP der Funkrelaisanordnung und zwischen dem anderen Teil SREP der Funkrelaisanordnung und den Funkteilnehmerstationen RNT bzw. Hy, nachstehend pauschal als PP bezeichnet, Normschnittstellen eingerichtet sind, die den Verhältnissen entsprechen, wie sie auch gegeben sind, wenn die Funkstrecke ohne Relaisanordnung betrieben wird. Konkret bedeutet dies, daß für zur selben Verbindung gehörende Funkübertragungen der Aufwärts- und der Abwärtsrichtung ein in periodisch sich wiederholenden Zeitrahmen gleichgelagertes Paar um die halbe Zeitrahmenlänge voneinander beabstandeter Zeitschlitze herangezogen wird, wobei in den beiden Hälften der Zeitrahmen jeweils nur Funkübertragungen derselben Übertragungsrichtung stattfinden.

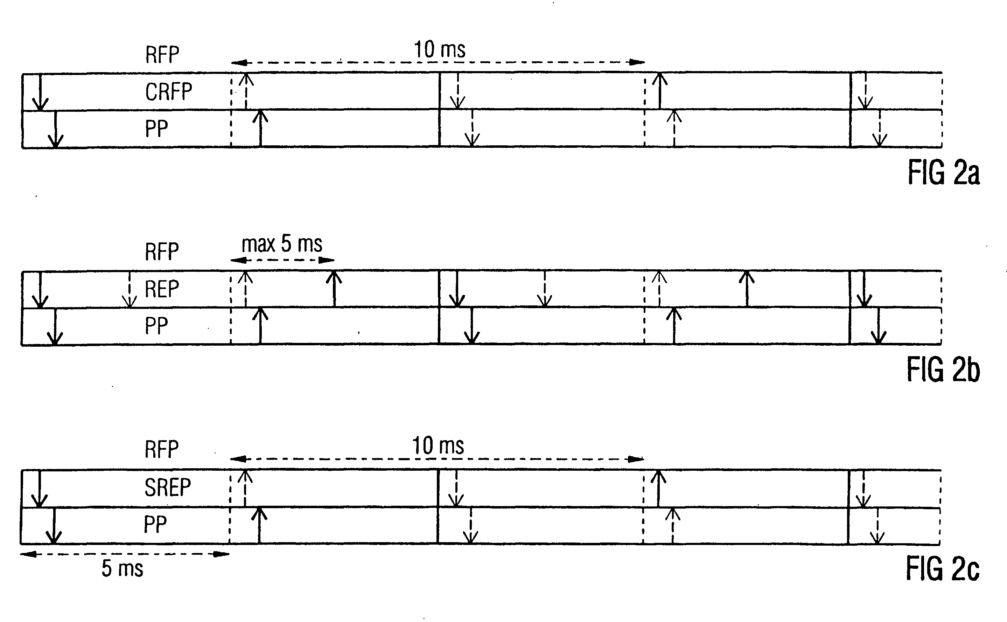

Dies ist in Figur 2c veranschaulicht, die die Verhältnisse bei Verwendung einer ungeteilten Funkrelaisanordnung zeigt.

Die fettgedruckten Pfeile in Figur 2c zeigen, wie eine Nachricht auf schnellstem Weg von der Funkbasisstation RFP über die Funkrelaisanordnung SREP zu den Funkteilnehmerstationen PP und wie die Antwort von dort wieder auf schnellstem Weg zur Funkbasisstation gelangen kann und zwar unter den Voraussetzungen, die die Funkrelaisanordnung SREP bietet.

Die Zeit für diesen Hin- und Rückweg über die Funkrelaisanordnung beträgt 15 ms, wogegen bei einer direkten Funkverbindung zwischen Funkbasisstation RFP und Funkteilnehmerstationen hierfür nur 5 ms benötigt würden. Somit kommt es zu einer Gesamtverzögerung von 10 ms gegenüber den Verhältnissen ohne Funkrelaisanordnung wie sie in Figur 2c) eingezeichnet ist.

Die gestrichelten Pfeile in Figur 2c) bedeuten Zeitschlitze, die ebenfalls genutzt werden, allerdings für Übertragungen, die in einem früheren oder späteren Zeitrahmen beginnen.

Es liegen damit in Figur 2c) dieselben Verhältnisse vor, wie bei einer ersten der bekannten Funkrelaisanordnungen, die im folgenden mit CRFP bezeichnet wird, und deren Schnittstellenverhaltnisse in der Figur 2a) dargestellt sind.

In der Figur 2b) sind die Schnittstellenverhältnisse dargestellt, wie sie gemäß dem Vorschlag für eine zweite bekannte Funkrelaisanordnung vorliegen. Bei dieser Funkrelaisanordnung, die hier mit REP bezeichnet ist, bietet lediglich die Schnittstelle REP/PP Standardbedingungen, indem Paare von jeweils um einen halben Zeitrahmen, also 5 ms, beabstandeter Zeitschlitze für die Aufwärts- und Abwärtsübertragung Verwendung finden. An der Schnittstelle RFP/REP hingegen werden je Verbindung zwei sich jeweils periodisch wiederholende Paare von Zeitschlitzen verwendet, bei denen jedoch die Beabstandung von Zeitschlitzen für die Übertragung in Aufwärtsrichtung und Abwärtsrichtung nicht notwendigerweise einen halben Zeitrahmenabstand beträgt, der Abstand vielmehr im Hinblick auf eine minimale Gesamtverzögerung ausgelegt ist. Die hier mit v bezeichnete, gegenüber den Verhältnissen ohne Funkrelaisanordnung zustandekommende Gesamtverzögerung beträgt im ungünstigsten Fall 5 ms.

Die gestrichelten Pfeile in Figur 2b) bedeuten Zeitschlitze, die von der Anordnung REP zwar belegt, aber nicht genutzt werden, im Gegensatz zu den in den Figuren 2a) und 2c) dargestellten Verhältnissen, wo keine ungenutzten Zeitschlitze vorkommen.

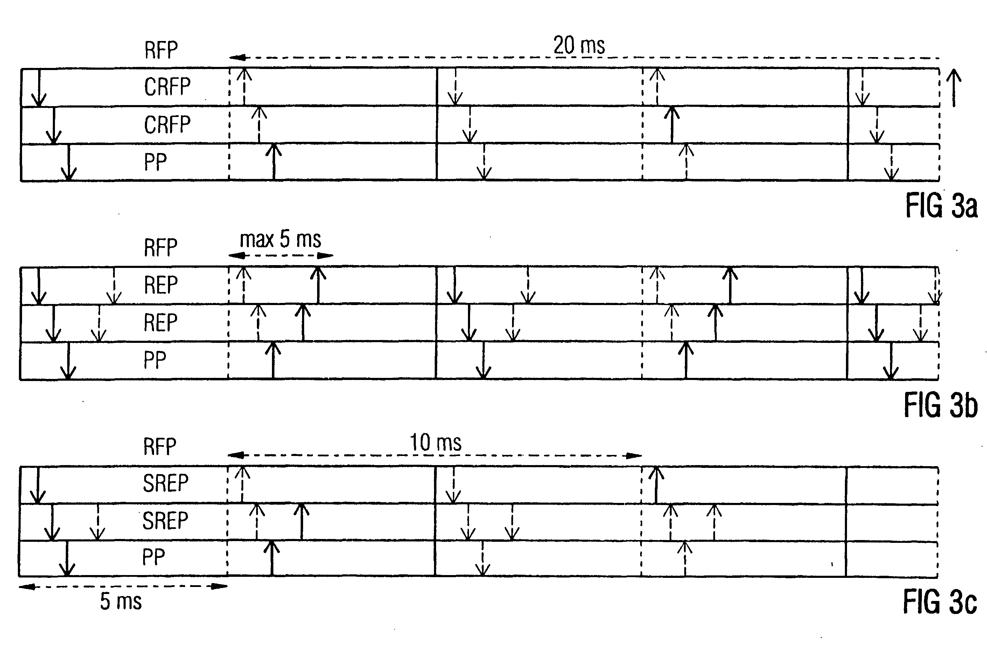

In der Figur 3 sind nun die Schnittstellenverhältnisse für die erfindungsgemäße Funkrelaisanordnung und die beiden erwähnten bekannten Funkrelaisanordnungen für den Fall einer Unterteilung derselben in zwei kaskadierte Teile dargestellt.

Wie die Figur 3c) zeigt, die die Verhältnisse bei der erfindungsgemäßen Funkrelaisanordnung betrifft, ist bei der Schnittstelle zwischen den beiden Teilen SREP der Funkrelaisanordnungen anders als bei den Schnittstellen RFP/SREP und SREP/PP von den Standardverhältnissen abgewichen, indem ähnlich wie bei den Verhältnissen gemäß Figur 2b) ein zweites Paar von Zeitschlitzen belegt wird, wobei jedoch zumindest was die Beabstandung von Zeitschlitzen der Aufwärts- und Abwärtsübertragungsrichtung unterschiedlicher Paare betrifft, die Festlegung auf eine halbe Zeitrahmenlänge nicht besteht. Bei der Zeitschlitzauswahl wird vielmehr auf das Entstehen einer möglichst geringen Gesamtlaufzeit geachtet. Die Figur 3c) zeigt überdies, daß auch bei zwei in Kaskade geschalteten Teilen SREP der Funkrelaisanordnung diese Verzögerungszeit nicht mehr als 10 ms beträgt.

Bei der bekannten Funkrelaisanordnung CRFP hingegen kommt es, wie die Figur 3a) zeigt, zu einer von der Funkrelaisanordnung verursachten zusätzlichen Gesamtsignallaufzeit von 20 ms.

Bei der bekannten Funkrelaisanordnung REP bleibt es zwar bei einer Gesamtsignallaufzeit von maximal 5 ms, siehe Figur 3b), dafür ist aber die Blockierungsgefahr, d. h. die Wahrscheinlichkeit bei einer Mehrzahl gleichzeitig abzuwickelnder Verbindungen keine geeigneten Zeitschlitze mehr zu finden, erheblich größer als bei der erfindungsgemäßen Funkrelaisanordnung, da die jeweilige Hin- und Rückübertragung sich innerhalb eines einzigen Zeitrahmens, also in weniger als 10 ms abspielen muß, wogegen bei der erfindungsgemäßen Anordnung 15 ms insgesamt zur Verfügung stehen.

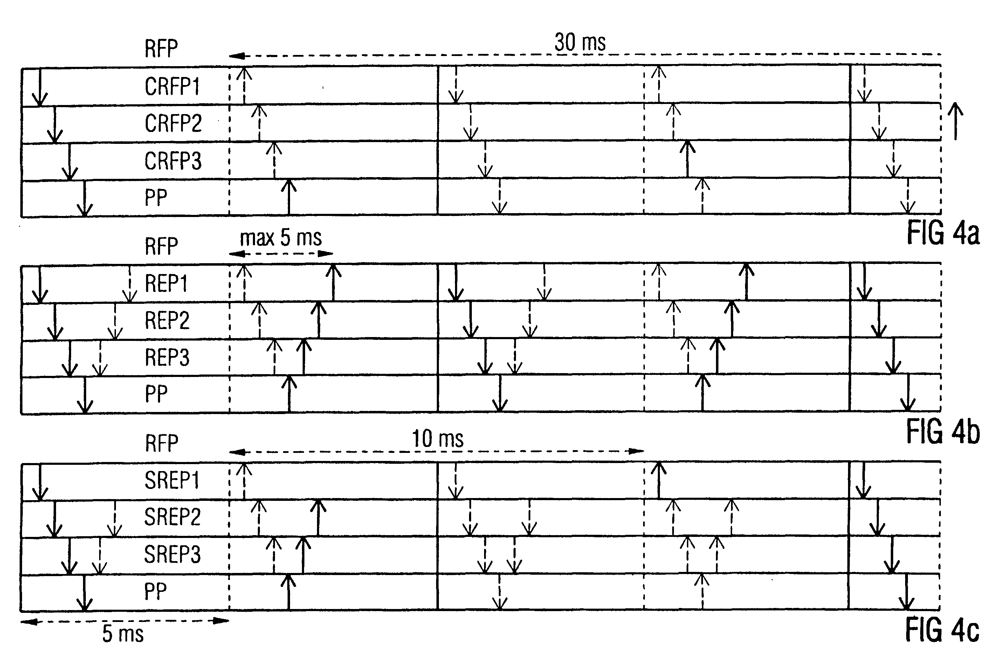

Entsprechendes zeigt die Figur 4, in der die Verhältnisse bei drei in Kaskade geschalteten Funkrelaisteilen dargestellt sind.

Auch hier bleibt es für die erfindungsgemäße Funkrelaisanordnung bei einer Gesamtsignallaufzeit von 10 ms, siehe Figur 4c), wogegen bei der bekannten Anordnung CRFP die Gesamtsignallaufzeit auf 30 ms ansteigt, siehe Figur 4a.

Gemäß einer weiteren Ausgestaltung der Erfindung werden bei einer Unterteilung der Funkrelaisanordnung in mehrere Teile und unter der immer geltenden Voraussetzung einer Synchronität der Zeitrahmen die zur Verfügung stehenden Zeitschlitze auf den verschiedenen Schnittstellen so verwendet, daß erstens mehrere bidirektionale Verbindungen gleichzeitig über die Funkrelaisanordnung geführt werden können, daß zweitens für alle Verbindungen das Ziel erreicht wird, daß die Funkrelaisanordnung die Übertragungszeit für Abwärts- und Aufwärtsrichtung nur um einen einzigen Zeitrahmen (10 ms) verlängert, und daß drittens alle besetzten Zeitschlitze auch benutzt werden, so daß kein Zeitschlitz verschwendet wird.

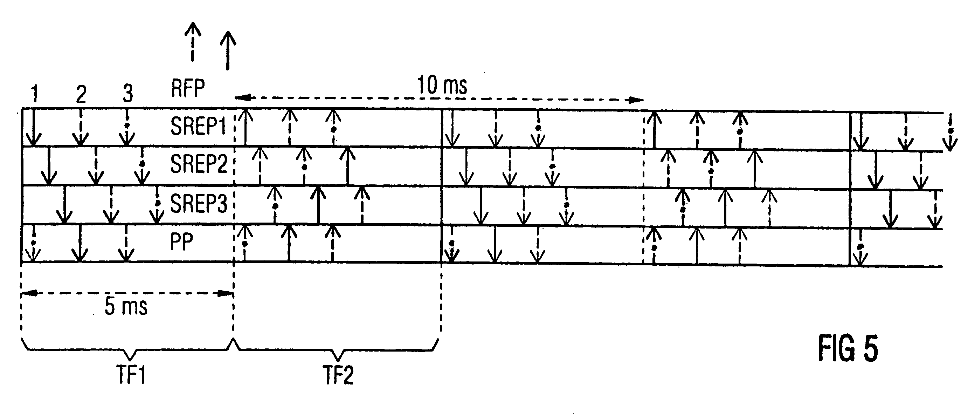

Dies ist in der Figur 5 für den Fall einer Kaskadierung dreier Teile der Funkrelaisanordnung und des Bestehens dreier gleichzeitiger Verbindungen veranschaulicht. Dabei sind die für die erste Verbindung verwendeten Zeitschlitze durch durchgezogene Pfeile, die Zeitschlitze der Verbindung Nummer 2 durch gestrichelte Pfeile und die Zeitschlitze für die Verbindung Nummer 3 durch strichpunktierte Pfeile markiert.
Auch hier gilt wieder wie bei den meisten vorhergehenden Figuren, daß die in dünner Strichstärke gezeichneten Pfeile Zeitschlitze für Hin- und Rückübertragungen markieren, die in früheren oder späteren Zeitrahmen gegenüber Zeitrahmen beginnen, in denen die bertragungen beginnen, für welche die durch fett gezeichnete Pfeile markierten Zeitschlitze verwendet werden.

Aus Figur 5 ist zu erkennen, wie die üblichen Zeitschlitzpaare innerhalb der Funkrelaisanordnung für die verschiedenen Verbindungen genutzt werden, um die Gesamtverzögerung zu minimieren. Bei der Schnittstelle RFP/SREP1 erkennt man in der ersten Hälfte TF1 des Zeitrahmens drei abwärts gerichtete Pfeile, die den Verbindungen 1,2 und 3 in dieser Reihenfolge zugeordnet sind. In der zweiten Rahmenhälfte TF2 sind die entsprechenden aufwärts gerichteten Pfeile zu sehen, die standardgemäß denselben Verbindungen 1,2 und 3 in dieser Reihenfolge zugeordnet sind.

Bei der Schnittstelle SREP1/SREP2 sind ebenfalls drei Paare von aufwärts- und abwärts gerichteten Pfeilen im vorschriftsmäßigen Duplexabstand von 5 ms zu sehen. In der Zeitrahmenhälfte TF1 ist auch die Zuordnung zu den Verbindungen 1,2 und 3 noch dieselbe wie zuvor. In der zweiten Zeitrahmenhälfte TF2 ist diese Reihenfolge jedoch vertauscht in die Reihenfolge 2,3,1. Durch diese Vertauschung wird die Reduktion der Gesamtverzögerung erzielt. Auch bei der Schnittstelle SREP2/SREP3 liegt eine Vertauschung innerhalb TF2 vor, nämlich in der Form 3,1,2. Auf der Schnittstelle SREP3/PP ist jedoch wieder standardgemäß die Reihenfolge innerhalb der Zeitrahmenhälften gleich, nämlich 1,2,3.

Nachstehend werden anhand einer Tabelle die Eigenschaften der erfindungsgemäßen Funkrelaisanordnung mit denen der bekannten Funkrelaisanordnungen nochmals verglichen.

| | **CRFP** | **REP** | **SREP** |
|---|---|---|---|
| Anz.der Zeitschlitzpaare; n Verbindungen 1 Relais | für n=1,2,3,4; 2,4,6,8 Paare | für n=1,2,3,4; 3,4,7,8 Paare | für 1,2,3,4; 2,4,6,8 Paare |
| Anz.der Zeitschlitzpaare; n Verbindungen 2 Relais | für n=1,2,3,4; 3,6,9,12 Paare | für n=1,2,3,4; 5,6,11,12 Paare | für n=1,2,3,4; 4,6,10,12 Paare |
| Gesamtlaufzeit 1 Relais | 10 ms | < 5 ms - | 10 ms |
| Gesamtlaufzeit 2 Relais | 20 ms | < 5 ms | 10 ms |
| Gesamtlaufzeit 3 Relais | 30 ms | < 5 ms | 10 ms |
| Verfügbare Zeitschlitzpaare nach 5 Relais | 5 | 1 | 5 |

## Patentansprüche

1. Funkrelaisanordnung zur Reichweitenverlängerung auf der Funkteilnehmerstationen mit einer Funkbasisstation verbindenden Funkstrecke eines Fernmeldesystems, welche zu den Funkteilnehmerstationen (Hy; RNT) und zur Funkbasisstation (RFP) hin dieselben Schnittstellenverhältnisse bietet, wie sie - vorzugsweise standardgemäß - bei einer relaislosen Funkstrecke gegeben sind, denen gemäß für die zur selben Verbindung gehörenden Funkübertragungen der Aufwärtsund Abwärtsrichtung jeweils ein in periodisch sich wiederholenden Zeitrahmen gleichgelagertes Paar um die halbe Zeitrahmenlänge voneinander beabstandeter Zeitsschlitze herangezogen wird, wobei in den beiden Hälften der Zeitrahmen jeweils Funkübertragungen derselben einen oder anderen Übertragungsrichtung stattfinden,
**gekennzeichnet durch** folgende Merkmale:
Sie besteht aus einer Mehrzahl kaskadierter Teile (SREP1 bis SREP3) und bietet zwischen diesen Teilen Schnittstellenverhältnisse, denen gemäß für die Funkübertragungen der Aufwärts- und Abwärtsrichtung derselben Verbindung zwischen je zwei kaskadierten Teilen ein Paar an die Beabstandung um die halbe Zeitrahmenlänge nicht gebundener, im Hinblick auf die Minimierung der Gesamt-Übertragungszeit günstig angeordneter, in jedem Fall aber der der betreffenden Übertragungsrichtung zugeordneten Zeitrahmenhälfte angehörender Zeitschlitze herangezogen wird.

2. Funkrelaisanordnung nach Anspruch 1,
**dadurch gekennzeichnet, daß** zwischen jeweils zwei kaskadierten Teilen (SREP1 bis SREP3) jeweils wenigstens zwei Paare von standardgemäß um die halbe Zeitrahmenlänge beabstandeten Zeitschlitzen der Aufwärts- und der Abwärtsübertragungsrichtung zur Bildung der an die Beabstandung um die halbe Zeitrahmenlänge nicht gebundenen Paare in der Weise herangezogen werden, daß die Menge der Zeitschlitze der nicht an die Beabstandung um die halbe Zeitrahmenlänge gebundenen Paare vollständig in der Menge der an die Beabstandung um die halbe Zeitrahmenlänge gebundenen Paare enthalten ist.

3. Funkrelaisanordnung nach Anspruch 2,
**dadurch gekennzeichnet, daß**
für mehrere gleichzeitige Verbindungen 1,2,...N auf den Schnittstellen zwischen den kaskadierten Teilen (SREP1 bis SREP3) jeweils nicht mehr als N Paare standardgemäß um die halbe Zeitrahmenlänge beabstandeter Zeitschlitze zur Bildung der angestrebten nicht an die Beabstandung um die halbe Zeitrahmenlänge gebundener Zeitschlitzpaare verwendet werden, so daß alle im Sinne des Standards belegten Zeitschlitze tatsächlich zur Informationsübertrqagung ausgenutzt werden.

4. Funkrelaisanordnung nach einem der Ansprüche 1 bis 3,
**dadurch gekennzeichnet, daß**
die standardmäßigen Schnittstellenbedingungen dem DECT-Standard entsprechen.

## Claims

1. Radio relay arrangement for increasing the range on the radio path, which connects radio subscriber stations to a radio base station, in a telecommunications system, which offers to the radio subscriber stations (Hy; RNT) and to the radio base station (RFP) the same interface conditions as those which are preferably provided as standard for a radio path without relays, to which in each case one pair (which are located in identical positions in periodically repeating time frames) of time slots (which are separated from one another by half the time frame length) is used accordingly for those radio transmissions which are associated with the same connection in the uplink direction and in the downlink direction, with radio transmissions in each case taking place in the same one or other transmission direction in the two halves of the time frames,
**characterized by** the following features:
said radio relay arrangement comprises a number of cascaded parts (SREP1 to SREP3) and offers, between these parts, interface conditions to which a pair of time slots (which are not associated with the separation by half the time frame length and are arranged advantageously with respect to minimizing the overall transmission time but which in each case are associated with the time frame half associated with the relevant transmission direction) are used accordingly for the radio transmissions in the uplink direction and in the downlink direction of the same connection between in each case two cascaded parts.

2. Radio relay arrangement according to Claim 1,
**characterized in that**, between in each case two cascaded parts (SREP1 to SREP3), in each case at least two pairs of time slots, which are separated as standard by half the time frame length, in the uplink transmission direction and in the downlink transmission direction are used to form the pairs which are not associated with the separation by half the time frame length in such a way that the number of time slots for the pairs which are not associated with the separation by half the time frame length are completely contained in the number of pairs which are associated with the separation by half the time frame length.

3. Radio relay arrangement according to Claim 2,
**characterized in that**
not more than N pairs of time slots, which are separated as standard by half the time frame length, are in each case used, for a number of simultaneous connections 1, 2, ...N on the interfaces between the cascaded parts (SREP1 to SREP3) to form the desired time slot pairs which are not associated with the separation by half the time frame length, so that all the time slots which are occupied in the sense of the Standard are actually used for information transmission.

4. Radio relay arrangement according to one of Claims 1 to 3,
**characterized in that**
the standard interface conditions comply with the DECT Standard.

## Revendications

1. Système de relais radio pour augmenter la portée sur la liaison hertzienne d'un système de télécommunications reliant des stations d'abonnés à une station radio de base,
qui offre les mêmes conditions d'interface en direction des stations d'abonnés (HY ; RNT) et en direction de la station radio de base (RFP) que celles qui existent - de préférence conformément aux normes - pour une liaison hertzienne sans relais, selon lesquelles on utilise à chaque fois, pour les transmissions radio dans les sens ascendant et descendant appartenant à la même communication, une paire d'intervalles de temps espacés l'un de l'autre de la moitié de la longueur de trame, laquelle paire occupe la même position dans des trames se répétant de manière périodique, des transmissions radio ayant le même sens de transmission se déroulant à chaque fois dans les deux moitiés de trame,
**caractérisé par** les caractéristiques suivantes :
il est formé d'une pluralité de parties en cascade (SREP1 à SREP3) et offre, entre ces parties, des conditions d'interface selon lesquelles, pour les transmissions radio des sens ascendant et descendant de la même communication, on utilise, entre deux parties respectives en cascade, une paire d'intervalles de temps qui ne sont pas soumis à l'espacement égal à la moitié de la longueur de trame, qui sont arrangés de manière favorable à une minimisation du temps total de transmission, mais qui appartiennent, dans tous les cas, à la moitié de trame associée au sens de transmission concerné.

2. Système de relais radio selon la revendication 1, **caractérisé en ce qu'**on utilise, entre deux parties respectives (SREP1 à SREP3) montées en cascade, à chaque fois au moins deux paires d'intervalles de temps des sens de transmission ascendant et descendant espacés, conformément à norme, de la moitié de la longueur de trame pour former les paires non soumises à l'espacement égal à la moitié de la longueur de trame, de manière à ce que l'ensemble des intervalles de temps des paires non soumises à l'espacement égal à la moitié de la longueur de trame soit contenu totalement dans l'ensemble des paires soumises à l'espacement égal à la moitié de la longueur de trame.

3. Système de relais radio selon la revendication 2, **caractérisé en ce que**, pour plusieurs communications simultanées 1, 2, ..., N, on n'utilise jamais, sur les interfaces entre les parties en cascade (SREP1 à SREP3), plus de N paires d'intervalles de temps espacés, selon la norme, de la moitié de la longueur de trame pour former les paires d'intervalles de temps non soumises à l'espacement égal à la moitié de la longueur de trame que l'on souhaite obtenir, de manière à ce que tous les intervalles de temps occupés, dans le sens de la norme, soient effectivement utilisés pour transmettre l'information.

4. Système de relais radio selon l'une des revendications 1 à 3, **caractérisé en ce que** les conditions d'interface conformes aux normes correspondent à la norme DECT.
